# EUROPÄISCHE PATENTSCHRIFT

(11) **EP 1 371 124 B1**
(45) Veröffentlichungstag und Bekanntmachung des Hinweises auf die Patenterteilung: **17.05.2006**
(21) Anmeldenummer: 02702681.4
(22) Anmeldetag: 15.03.2002
(51) Int. Cl.: H02K 15/10, H02K 3/34

(54) **VERFAHREN ZUM HERSTELLEN EINES LEITERSTABES**
METHOD FOR PRODUCING A BAR-TYPE CONDUCTOR
PROCEDE DE PRODUCTION D'UNE BARRE CONDUCTRICE

(30) Priorität: 16.03.2001 DE 10113258
(43) Veröffentlichungstag der Anmeldung: 17.12.2003
(73) Patentinhaber: Alstom Technology Ltd, 5400 Baden (CH)
(72) Erfinder: BAUMANN, Thomas, CH-5430 Wettingen (CH); KLAMT, Thomas, CH-5107 Schinznach-Dorf (CH); NIENBURG, Hans-Christoph, 69121 Heidelberg (DE)
(86) Internationale Anmeldenummer: PCT/IB2002/000792
(87) Internationale Veröffentlichungsnummer: WO 2002/075902

(56) Entgegenhaltungen:
- WO-A-97/43816
- DE-A- 2 538 702
- GB-A- 1 142 197
- US-A- 4 109 375

## Beschreibung

### Technisches Gebiet

Die Erfindung betrifft ein Verfahren zum Herstellen eines aus mehreren gegeneinander elektrisch isolierten Teilleitern bestehenden, elektrisch leitenden Leiterstabes. Derartige Leiterstäbe können beispielsweise als Statorleiter in rotierenden elektrischen Maschinen, z.B. Generatoren, oder in Transformatoren verwendet werden. Leiterstäbe, deren Teilleiter auf bestimmte Art gegeneinander verdrillt sind, werden auch als "Roebelstäbe" bezeichnet. Im Unterschied zu Stahlseilen, die aus einer Vielzahl von Stahldrähten mit Kreisquerschnitt oder Sechseckquerschnitt aufgebaut sind, besitzen die Teilleiter eines solchen Leiterstabes regelmäßig einen Rechteckquerschnitt.

### Stand der Technik

Um beispielsweise in einer rotierenden elektrischen Maschine die elektrischen Verluste zu reduzieren, sind die Teilleiter der darin verwendeten Statorleiter gegeneinander isoliert. Dementsprechend wird ein Leiterstab aus Teilleitern zusammengebaut, die mit einer Isolierung versehen sind. Das Aufbringen einer Isolierung auf die Teilleiter kann beispielsweise mit einem zweistufigen Beschichtungsverfahren durchgeführt werden, bei dem in einer ersten Stufe ein Kunststoffpulver auf die Oberfläche des Teilleiters aufgebracht wird, um eine Pulverschicht auszubilden. In einer zweiten Stufe wird diese Pulverschicht gesintert, wobei der Kunststoff aufschmilzt und - je nach Kunststoff- auch vernetzt und aushärtet. Die sich dabei ausbildende Isolierschicht muß, um ihre Isolationsfunktion erfüllen zu können, einen geschlossenen und im wesentlichen homogenen Film bilden.

Damit beim Sintern der Pulverschicht eine elektrisch isolierende, geschlossene und im wesentlichen homogene Isolationsschicht entsteht, muß die Auftragsdicke, mit der die Pulverschicht auf den Teilleiter aufgetragen wird, eine bestimmte Mindestdicke aufweisen. Die untere Grenze für eine Auftragdicke, für die das erfüllt ist, liegt erfahrungsgemäß bei etwa 50 µm. Dünne Isolierungsschichten sind jedoch von Vorteil, da einerseits bei gleichbleibendem Gesamtquerschnitt des Leiterstabes der stromführende Querschnitt vergrößert werden kann, wodurch sich die Leistungsfähigkeit der damit ausgestatteten Maschine erhöht. Anderseits kann die Reduktion der Isolierungsdicke der Teilleiter auch zu einer Reduktion des Gesamtquerschnitts des Leiterstabs verwendet werden, ohne dabei die Leistung der damit ausgestatteten Maschine zu beeinträchtigen. Ein weiterer Vorteil einer reduzierten Teilleiterisolation kann auch darin gesehen werden, daß dadurch der Wärmeübergang zwischen den Teilleitern verbessert wird. Dies ist dann wichtig, wenn sich die Teilleiter des Leiterstabes aufgrund unterschiedlicher Verluste verschieden erwärmen. Durch den verbesserten Wärmeübergang zwischen den Teilleitern können die unterschiedlichen Temperaturen zumindest teilweise wieder ausgeglichen werden.

Das Dokument US-4 109 375 beschreibt einen Leiter mit einer Isolierung und einer auf einer Seite des Leiters angeordnete Klebschicht, der auf einem Träger zu einer Spule gewickelt wird. Es ist diesbezüglich weiter vorgesehen, die Spule zu erwärmen, damit die Klebschicht die Leiter untereinander verbindet.

Das Dokument GB-1 142 197 beschreibt einen vorgebogenen Leiterstab für eine elektrische Maschine, der mit einer Isolierung beschichtet wird. Diese vorbekannte Verfahren sieht nicht vor, dass die so vorgefertigten Leiterstäbe miteinander gebündelt werden.

### Darstellung der Erfindung

Die vorliegende Erfindung beschäftigt sich mit dem Problem, für einen aus mehreren Teilleitern aufgebauten Leiterstab ein Herstellungsverfahren anzugeben, das die Ausbildung besonders dünner Isolierungsschichten ermöglicht.

Erfindungsgemäß wird dieses Problem durch ein Verfahren mit den Merkmalen des Anspruchs 1 gelöst.

Die Erfindung beruht auf dem allgemeinen Gedanken, den Sintervorgang zweistufig auszugestalten, wobei in einer ersten Sinterstufe zumindest ein Teil der Isolation der einzelnen Teilleiter nicht vollständig ausgehärtet wird und wobei in einer zweiten Sinterstufe die Teilleiter im zusammengebauten Leiterstab aneinandergepreßt werden, wodurch ein Teil des die Isolation bildenden Kunststoffs verdrängt wird und zwischen den Teilleitern herausquillt und nur der in der Isolierung verbleibende Kunststoff aushärtet. Durch diese Vorgehensweise lassen sich sehr geringe Isolierungsdicken erzielen. Beispielsweise bewirken die während der ersten Sinterstufe beim Sintern der Teilleiter bereits vollständig ausgehärteten Bestandteile der Isolierungen während der zweiten Sinterstufe beim Sintern des zusammengebauten Leiterstabes, daß eine hinreichende Isolationsschicht zwischen den benachbarten Teilleitern zurückbleibt, um die Isolierfunktion der Isolierung zu gewährleisten.

Bei einer bevorzugten Ausführungsform werden auf die Teilleiter mehrere Isolierschichten aufgebracht, wobei wenigstens die innerste Isolierschicht im wesentlichen vollständig ausgehärtet wird. Dadurch wird sichergestellt, daß wenigstens die vollständig ausgehärtete Isolierschicht beim Auspressen der Isolierung zwischen den Teilleitern verbleibt und die Isolierungswirkung gewährleistet.

Gemäß einer besonders vorteilhaften Weiterbildung kann die wenigstens eine, im wesentlichen vollständig ausgehärtete Isolierschicht aus einer Pulverschicht hervorgehen, deren Auftragsdicke kleiner ist als etwa 50 µm. Diese Ausführungsform nutzt die Erkenntnis, daß es beim erfindungsgemäßen Verfahren zur Ausbildung einer wirksamen Isolierung nicht erforderlich ist, daß die wenigstens eine, im wesentlichen vollständig ausgehärtete Isolierschicht des jeweiligen Teilleiters bereits bei der Herstellung des Teilleiters einen geschlossenen und homogenen Film bildet. Denn sofern in dieser ausgehärteten Isolierschicht Lücken oder Löcher bestehen sollten, werden diese von einer nachfolgend aufgebrachten Isolierschicht ausgefüllt, wobei diese Füllungen auch beim Auspressen der Isolierung in der zweiten Sinterstufe zwischen den Teilleitern verbleiben. Dementsprechend kann sich der gewünschte geschlossene homogene Film für die Isolierschicht spätestens im zusammengebauten Zustand des Leiterstabes ausbilden.

Bei einer anderen Ausführungsform kann zumindest eine Isolierschicht der Teilleiter, die beim Sintern der Teilleiter nicht vollständig ausgehärtet wird, aus einer Pulverschicht hervorgehen, die mit einem Kunststoffpulver gebildet ist, dem ein Grobfüller beigemischt ist, dessen mittlere Korngröße kleiner als die Auftragsdicke der Pulverschicht ist. Beim Auspressen der Isolierung wirkt dieser Grobfüller als Abstandshalter und verhindert das vollständige Auspressen des Kunststoffs während der zweiten Sinterstufe und gewährleistet dadurch, daß zumindest soviel Kunststoff zwischen den Teilleitern verbleibt, daß dieser ausreicht, eine voll funktionsfähige Isolierung zwischen den Teilleitern auszubilden. Diese besondere Ausführungsform funktioniert auch dann, wenn keine der Isolierschichten der Teilleiter während der ersten Sinterstufe vollständig ausgehärtet worden ist, so daß besonders dünne Isolierschichten erzielbar sind.

Besonders zweckmäßig arbeitet das erfindungsgemäße Verfahren dann, wenn der Kunststoff zur Ausbildung der Isolierung so gewählt ist und wenn das Sintern der zweiten Sinterstufe so durchgeführt wird, daß die Teilleiter des zusammengebauten Leiterstabes während der zweiten Sinterstufe beim Aushärten der Isolierung miteinander verkleben. Zusätzlich Maßnahmen zum Verfestigen und Stabilisieren des zusammengebauten Leiterstabes können somit entfallen.

Weitere wichtige Merkmale und Vorteile des erfindungsgemäßen Verfahrens ergeben sich aus den Unteransprüchen und aus der nachfolgenden Beschreibung bevorzugter Ausführungsbeispiele der Erfindung.

### Wege zur Ausführung der Erfindung

Um einen Leiterstab entsprechend dem erfindungsgemäßen Verfahren herzustellen, müssen zunächst Teilleiter hergestellt werden, die zu diesem Leiterstab zusammengebaut werden sollen. Für die Herstellung dieser Teilleiter wird ein unisolierter Endlosdraht verwendet, der den Querschnitt der herzustellenden Teilleiter besitzt und aus einem elektrisch leitenden Material, z.B. Kupfer, besteht. Aus diesem Endlosdraht werden dann durch Ablängen des Endlosdrahtes auf Teilleiterlänge unverformte Teilleiter hergestellt. Je nach Art des herzustellenden Leiterstabes können die Teilleiter nach dem Ablängen biegeverformt, insbesondere abgekröpft, werden, um eine gewünschte dreidimensionale Form für die Teilleiter zu erzielen.

Auf die so hergestellten Teilleiter wird nun wenigstens eine Isolierschicht aufgebracht. Das Aufbringen einer solchen Isolierschicht wird dabei durch ein zweistufiges Beschichtungsverfahren durchgeführt. In einem ersten Teilschritt werden die zu isolierenden Bereiche des jeweiligen Teilleiters mit einem Kunststoffpulver beschichtet. Als Beschichtungspulver eignen sich insbesondere duroplastische bzw. elastomere Kunststoffe, wie z.B. Epoxid- und Silikonharze. Um die mechanischen Eigenschaften der Isolierung zu verbessern, beispielsweise um den thermischen Ausdehnungskoeffizienten zu reduzieren oder das Fließen des Kunststoffs bei hohen Temperaturen und hohen Belastungen zu reduzieren, können diesen Kunststoffen anorganische Füllstoffe, z.B. in Konzentrationen von 10 % bis 80 %, beigemischt werden.

Das Beschichten des Teilleiters erfolgt z.B. in einer elektrostatischen Wirbelbettkammer oder einer elektrostatischen Sprühkammer, die kleiner sein kann als der zu beschichtende Teilleiter. Eine solche Beschichtungskammer weist an gegenüberliegenden Enden Öffnungen auf, durch die die zu beschichtenden Teilleiter einzeln oder zu mehreren gleichzeitig durch die Kammer hindurchgezogen werden. Die Auftragsmenge des Kunststoffpulvers und somit die Auftragdicke der Pulverschicht sind z.B. über den Vorschub regelbar, mit dem der oder die Teilleiter durch die Kammer hindurchgezogen werden. Damit das Kunststoffpulver auf der Oberfläche der Teilleiter haften bleibt, wird es für den Beschichtungsvorgang elektrostatisch aufgeladen.

Im Anschluß daran folgt der zweite Teilschritt, bei dem die aufgebrachte Pulverschicht gesintert wird. Beim Sintern wird der Kunststoff erwärmt, wodurch dieser aufschmilzt und zumindest teilweise aushärtet, wobei sich die Isolierschicht ausbildet. Sofern nur eine einzige Isolierschicht auf den Teilleiter aufgebracht wird, wird das Sintern so gesteuert, daß diese Isolierschicht nicht vollständig aushärtet.

Wenn mehrere Isolierschichten auf den Teilleiter aufgebracht werden, wird das Sintern so gesteuert, daß dabei wenigstens eine äußere Isolierschicht nicht vollständig ausgehärtet wird.

Dieser zweite Teilschritt erfolgt vorzugsweise in einer getrennten Sinterkammer und kann ebenso in einem Durchlaufverfahren durchgeführt werden, wobei z.B. eine optische oder elektrische oder induktive Heizung vorgesehen sein kann. Beim Sintern schmilzt das Kunststoffpulver auf bzw. verschmilzt. Bei Duroplasten kommt es außerdem zu einer thermischen Vernetzung des Kunststoffs. Durch das Verschmelzen und/oder Vernetzen bildet sich die gewünschte Isolierschicht aus. Bei Duroplasten korreliert der Aushärtungsgrad mit dem Vernetzungsgrad. Dementsprechend wird bei Duroplasten der Sinterprozeß zumindest für eine Isolierschicht so gesteuert, daß diese duroplastische Isolierschicht nicht oder nur teilweise vernetzt wird. Der Vernetzungsgrad bzw. der Aushärtungsgrad kann beispielsweise über die Temperatur und über die Dauer der Temperaturbehandlung gesteuert werden. Die so hergestellte, nicht vollständig ausgehärtete bzw. vernetzte Isolierschicht ist thermisch noch reaktiv.

Nachdem die Teilleiter auf diese Weise mit einer oder mit mehreren Isolierschichten versehen sind, werden sie zu einem Leiterstab zusammengebaut. Der so zusammengebaute Leiterstab kann dann in eine gewünschte Form gebogen werden, die er nach seiner Fertigstellung aufweisen soll. In einer geeigneten Vorrichtung werden nun im zusammengebauten Leiterstab die Teilleiter aneinandergepreßt. Gleichzeitig wird erneut ein Sinterungsvorgang durchgeführt, bei dem der Kunststoff der nicht vollständig ausgehärteten bzw. vernetzten Isolierschichten zumindest teilweise wieder aufschmilzt. Durch die Preßbelastung der Teilleiter wird der aufgeschmolzene Kunststoff ausgepreßt, wobei die Dicke der Isolierung zwischen den Teilleitern abnimmt. Der so ausgepreßte Kunststoff sammelt sich beispielsweise in entsprechenden Kavitäten des Leiterstabes bzw. auf der Staboberfläche.

Vorteilhafterweise verbinden sich bei diesem als "Heißpressen" bezeichneten Vorgang die Isolierschichten der aneinanderangrenzenden Teilleiter, wodurch die Teilleiter des zusammengebauten Leiterstabes miteinander verkleben. Nach dem Aushärten des Kunststoffes ist der Leiterstab in der gewünschten Form verfestigt.

Bei einem speziellen Ausführungsbeispiel kann zur Ausbildung der Isolierung ein Epoxidharzpulver verwendet werden, das beispielsweise eine mittlere Korngröße von ca. 40 µm aufweist. Dieses Epoxidharzpulver ist beispielsweise mit 40 % TiO₂ gefüllt, wobei dieser Füllstoff z.B. einen d50-Wert von ca. 0,2 µm aufweist. Vorzugsweise werden vier Isolierschichten aufgetragen, so daß sich nach dem Sintern eine Dicke von ca. 100 µm für die Isolierung ergibt. Der Sintervorgang der zuerst aufgebrachten Isolierschicht wird dabei so gesteuert, daß die Isolierschicht annähernd vollständig aushärtet, was z.B. einer Sinterungsdauer von etwa drei bis fünf Minuten bei etwa 180°C entspricht. Die drei nachfolgenden Pulverschichten werden nur soweit gesintert, daß gerade das Minimum in der Viskosität leicht überschritten wird; dies entspricht einer Sinterungsdauer von etwa zehn bis zwanzig Sekunden. Hierdurch werden die drei letzten Isolierschichten nicht oder nur geringfügig ausgehärtet, so daß der Kunststoff im wesentlichen im sogenannten "B-Zustand" verbleibt. Dementsprechend befinden sich von der gesamten Isolierung etwa Dreiviertel im B-Zustand. Beim Heißpressen des zusammengebauten Leiterstabes wird der im B-Zustand befindliche Kunststoff fließfähig und wird aus dem Verbund ausgepreßt. Bei diesem Ausführungsbeispiel kann die Dicke der Isolierung beim Heißpressen des Leiterstabes auf etwa 30 µm reduziert werden, ohne daß die Qualität hinsichtlich Homogenität und Isolierungswirkung der dabei entstehenden Isolierung leidet.

Im Vergleich zu einer herkömmlichen Vorgehensweise, bei der die Auftragsdicke der Pulverschicht etwa 50 µm aufweisen muß, um eine homogene Schicht zu erzeugen, kann durch das erfindungsgemäße Verfahren die Isolierschichtdicke somit etwa halbiert werden.

Bei einer anderen speziellen Ausführungsform wird zur Herstellung der Isolierung ein Epoxidharzpulver verwendet, das eine mittlere Korngröße von etwa 40 µm besitzt. Das Epoxidharzpulver ist beispielsweise mit 30 % TiO₂ gefüllt, wobei die mittlere Korngröße dieses Füllstoffs wieder etwa 0,2 µm betragen kann. Entsprechend dieser besonderen Ausführungsform ist dem Kunststoffpulver außerdem ein Grobfüller beigemischt. Dieser Grobfüller kann z.B. etwa 10 % des Masseanteils des Kunststoffpulvers bilden. Der Grobfüller besteht vorzugsweise aus einem elektrisch isolierenden Material, z.B. Keramik oder Quarz. Bevorzugt werden hier Quarzglaskugeln, die z.B. eine mittlere Korngröße von etwa 15 µm aufweisen. Auch dieses Kunststoffpulver wird z.B. in vier Schichten aufgetragen, so daß auch die Gesamtdicke der gesinterten Isolierung ca. 100 µm beträgt. Auch hier wird jede einzelne Isolierschicht thermisch gesintert, wobei der Sinterungsprozeß, insbesondere die Dauer der Wärmebehandlung, bei jeder Schicht so gesteuert ist, daß kein oder nur ein minimales Aushärten erfolgt, bei dem gerade das Minimum in der Viskosität leicht überschritten wird; das Sintern jeder Schicht dauert bei etwa 180°C z.B. nur zehn bis zwanzig Sekunden. Durch diese Vorgehensweise bleiben sämtliche Isolierschichten im wesentlichen im nicht ausgehärteten B-Zustand.

Beim nachfolgenden Heißpreßvorgang des zusammengebauten Leiterstabes dienen die Grobfüller als Abstandshalter und bewirken, daß der verflüssigte Kunststoff nicht vollständig ausgepreßt wird. Der Grobfüller sorgt außerdem dafür, daß benachbarte Teilleiter beim Heißpressen nicht miteinander in elektrischen Kontakt kommen.

Bei dieser Ausführungsform kann beim Heißpressen eine endgültige Dicke für die Isolierung zwischen zwei benachbarten Teilleitern von etwa 20 µm erreicht werden, wobei auch hier keine Abstriche hinsichtlich der Homogenität der erzielbaren Isolierung in Kauf genommen werden müssen. Da die so gebildete Isolierschicht jeweils den beiden Teilleitern zuzurechnen ist, zwischen denen sie ausgebildet ist, besitzt jeder einzelne Teilleiter eine (gedachte) Isolierschicht mit einer Dicke von etwa 10 µm. Im Vergleich zu einer herkömmlich hergestellten Schichtdicke ergibt sich dadurch eine Verbesserung um den Faktor 5.

## Patentansprüche

1. Verfahren zum Herstellen eines aus mehreren, gegeneinander elektrisch isolierten Teilleitern bestehenden, elektrisch leitenden Leiterstabes,
mit folgenden Schritten:
A: Herstellen der Teilleiter,
B: Aufbringen wenigstens einer Isolierschicht auf die Teilleiter, jeweils mit folgenden Teilschritten:
B1: Beschichten der zu isolierenden Bereiche des Teilleiters mit einem Kunststoffpulver,
B2: Sintern dieser Pulverschicht mit Aufschmelzen des Kunststoffs und zumindest teilweises Aushärten des Kunststoffs zu einer Isolierschicht, wobei das Sintern so durchgeführt wird, daß mindestens eine äußere Isolierschicht nicht vollständig ausgehärtet ist,
C: Zusammenbauen mehrerer isolierter Teilleiter zu einem Leiterstab,
D: Sintern der Isolierschichten der Teilleiter mit gleichzeitigem Aneinanderpressen der Teilleiter im zusammengebauten Leiterstab, wobei der Kunststoff bei den nicht vollständig ausgehärteten Isolierschichten zumindest teilweise wieder aufschmilzt und zwischen den Teilleitern ausgepreßt wird und wobei der zwischen den Teilleitern verbleibende Kunststoff im wesentlichen vollständig aushärtet.

2. Verfahren nach Anspruch 1, **dadurch gekennzeichnet, daß** in Schritt B mehrere Isolierschichten aufgebracht werden, wobei wenigstens die innerste Isolierschicht im wesentlichen vollständig ausgehärtet wird.

3. Verfahren nach Anspruch 2, **dadurch gekennzeichnet, daß** die wenigstens eine im wesentlichen vollständig ausgehärtete Isolierschicht aus einer Pulverschicht hervorgeht, deren Auftragsdicke kleiner ist als etwa 50 µm.

4. Verfahren nach Anspruch 2 oder 3, **dadurch gekennzeichnet, daß** nur die innerste Isolierschicht im wesentlichen vollständig ausgehärtet wird und daß alle anderen Isolierschichten nicht vollständig ausgehärtet werden.

5. Verfahren nach einem der Ansprüche 1 bis 4, **dadurch gekennzeichnet, daß** zumindest eine Isolierschicht, die in Schritt B nicht vollständig ausgehärtet wird, aus einer Pulverschicht hervorgeht, die mit einem Kunststoffpulver gebildet ist, dem ein Grobfüller beigemischt ist, dessen mittlere Korngröße kleiner als die Auftragsdicke der Pulverschicht ist.

6. Verfahren nach Anspruch 5, **dadurch gekennzeichnet, daß** in Schritt B alle Isolierschichten nicht vollständig ausgehärtet werden.

7. Verfahren nach Anspruch 5 oder 6, **dadurch gekennzeichnet, daß** der Grobfüller aus einem elektrisch isolierenden Material besteht.

8. Verfahren nach einem der Ansprüche 1 bis 7, **dadurch gekennzeichnet, daß** der Kunststoff zur Ausbildung der Isolierung so gewählt ist und das Sintern gemäß Schritt D so durchgeführt wird, daß die Teilleiter des zusammengebauten Leiterstabes miteinander verkleben.

## Claims

1. Process for manufacturing an electrically conducting conductor bar comprising a number of partial conductors electrically insulated from one another, with the following steps:
A: manufacturing the partial conductors,
B: applying at least one insulating layer to the partial conductors, in each case with the following substeps:
B1: coating the regions to be insulated of the partial conductor with a plastics powder,
B2: sintering this powder layer by melting the plastic and at least partially curing the plastic to form an insulating layer, the sintering being carried out in such a way that at least one outer insulating layer is not completely cured,
C: assembling a number of insulated partial conductors to form a conductor bar,
D: sintering the insulating layers of the partial conductors while simultaneously pressing the partial conductors against one another in the assembled conductor bar, the plastic in the case of the not completely cured insulating layers at least partially melting again and being squeezed out between the partial conductors, and the plastic remaining between the partial conductors curing substantially completely.

2. Process according to Claim 1, **characterized in that** in step B a number of insulating layers are applied, with at least the innermost insulating layer being cured substantially completely.

3. Process according to Claim 2, **characterized in that** the at least one substantially completely cured insulating layer is derived from a powder layer of an application thickness which is less than approximately 50 µm.

4. Process according to Claim 2 or 3, **characterized in that** only the innermost insulating layer is cured substantially completely and **in that** all the other insulating layers are not completely cured.

5. Process according to one of Claims 1 to 4, **characterized in that** at least one insulating layer which is not completely cured in step B is derived from a powder layer which is formed by a plastics powder with which there has been admixed a coarse filler, the average grain size of which is less than the application thickness of the powder layer.

6. Process according to Claim 5, **characterized in that** in step B all the insulating layers are not completely cured.

7. Process according to Claim 5 or 6, **characterized in that** the coarse filler consists of an electrically insulating material.

8. Process according to one of Claims 1 to 7, **characterized in that** the plastic for forming the insulation is chosen such that the sintering according to step D is carried out in such a way that the partial conductors of the assembled conductor bar adhesively bond to one another.

## Revendications

1. Procédé de production d'une barre conductrice, conductrice de l'électricité, composée de plusieurs conducteurs partiels électriquement isolés les uns des autres, comprenant les étapes suivantes:
A: fabriquer les conducteurs partiels,
B: déposer au moins une couche isolante sur les conducteurs partiels, chaque fois avec les étapes partielles suivantes:
B1: revêtir les zones à isoler du conducteur partiel avec une poudre de plastique,
B2: fritter cette couche de poudre par fusion du plastique et durcissement au moins partiel du plastique en une couche isolante, le frittage étant exécuté de telle manière qu'au moins une couche isolante extérieure ne soit pas complètement durcie,
C: assembler plusieurs conducteurs partiels isolés en une barre conductrice,
D: fritter les couches isolantes des conducteurs partiels en pressant simultanément les conducteurs partiels les uns contre les autres dans la barre conductrice assemblée, le plastique des couches isolantes incomplètement durcies étant de nouveau au moins partiellement fondu et pressé entre les conducteurs partiels et le plastique restant entre les conducteurs partiels étant sensiblement complètement durci.

2. Procédé selon la revendication 1, **caractérisé en ce que** plusieurs couches isolantes sont déposées à l'étape B, au moins la couche isolante la plus intérieure étant sensiblement complètement durcie.

3. Procédé selon la revendication 2, **caractérisé en ce que** la au moins une couche isolante sensiblement complètement durcie est formée par une couche de poudre, dont l'épaisseur de dépôt est inférieure à environ 50 *µ*m.

4. Procédé selon la revendication 2 ou 3, **caractérisé en ce que** la couche isolante la plus intérieure est sensiblement complètement durcie et **en ce que** toutes les autres couches isolantes ne sont pas complètement durcies.

5. Procédé selon l'une quelconque des revendications 1 à 4, **caractérisé en ce qu'**au moins une couche isolante, qui n'a pas été durcie complètement à l'étape B, provient d'une couche de poudre qui est formée avec une poudre de plastique, à laquelle on a mélangé une charge grossière, dont la taille de grain moyenne est plus petite que l'épaisseur de dépôt de la couche de poudre.

6. Procédé selon la revendication 5, **caractérisé en ce qu'**à l'étape B, toutes les couches isolantes ne sont pas durcies complètement.

7. Procédé selon la revendication 5 ou 6, **caractérisé en ce que** la charge grossière se compose d'une matière électriquement isolante.

8. Procédé selon l'une quelconque des revendications 1 à 7, **caractérisé en ce que** le plastique destiné à la formation de l'isolation est choisi de telle façon et le frittage selon l'étape D est exécuté de telle façon que les conducteurs partiels de la barre conductrice assemblée se collent les uns aux autres.
